# EUROPEAN PATENT APPLICATION

(11) **EP 4 414 298 A1**
(43) Date of publication of application: **14.08.2024**
(21) Application number: 24154715.7
(22) Date of filing: 30.01.2024
(51) Int. Cl.: B65G 47/08, B65B 1/00, B65B 35/44, B65G 54/02, B65B 35/30, B65B 35/36

(54) **GROUPING APPARATUS, PACKAGING PLANT, METHOD FOR GROUPING PACKAGES**

(30) Priority: 09.02.2023 IT 202300002217
(71) Applicant: Tetra Laval Holdings & Finance S.A., 1009 Pully (CH)
(72) Inventor: PICCININI, Giorgio, 41123 MODENA (IT); ROSSI, Stefano, 41123 MODENA (IT)
(74) Representative: Tetra Pak - Patent Attorneys SE

(57) **Abstract**

There is described a grouping apparatus (5,5') for generating groups (G) of packages (2) filled with a pourable product according to a desired pattern; the grouping apparatus comprises an inlet for receiving a plurality of packages (2) at an inlet station (8), a plurality of carriers (9), each one configured to carry in a non-moveable manner at least one package (2) and configured to receive at least one package (2) at the inlet station (8); and a planar motor (10) configured to selectively and independently control the advancement of the carriers (9).

The planar motor (10) is configured to control the advancement of the plurality of carriers (9) carrying, in use, at least one respective package (2) in dependence of the desired pattern of each group (G) and such that a set (C) of carriers (2) are arranged and oriented with respect to one another such that the respective packages (2) are positioned according to the desired pattern.

## Description

### TECHNICAL FIELD

The present invention relates to a grouping apparatus for a packaging plant, in particular a grouping apparatus for grouping packages filled with a pourable product, in particular a pourable food product.

Advantageously, the present invention also relates to a packaging plant for producing packages filled with a pourable product, in particular a pourable food product, and having at least one grouping apparatus.

Advantageously, the present invention also relates to a method for grouping packages filled with a pourable product, in particular a pourable food product.

### BACKGROUND ART

As it is known, many liquid or pourable food products, such as fruit juice, UHT (ultra-high-temperature treated) drinks, milk, wine, tomato sauce, etc., are sold in packages made of a paper- or carton-based packaging material. A typical example of this type of packages is the parallelepiped-shaped package known as Tetra Brik Aseptic^{®}, which is made by folding and sealing a web of laminated packaging material.

The packaging material has a multilayer structure substantially comprising a base layer of fibrous material, e.g., paper or carton, covered on both sides with layers of heat-sealable polymeric material, e.g., polyethylene. In the case of aseptic packages for long-storage products, such as UHT milk, and for which storage and distribution are made in ambient temperature, the packaging material also typically comprises a layer of gas- and light-barrier material, e.g., aluminum foil, which is superimposed on a layer of heat-sealable polymeric material, and is in turn covered with another layer of heat-sealable polymeric material forming the inner face of the package eventually contacting the food product.

Packages formed from the aforedescribed multilayer packaging material are normally produced in fully automatic packaging plants such as the Tetra Pak^{®} A3/Flex filling machine, which applies the form-fill-seal technology.

After being formed, packages of this sort advance one after the other and may be directed into a grouping apparatus of the packaging plant for generating groups of packages. Ultimately, the groups of packages are transported to points of sale, ready for consumption by consumers. The known grouping apparatuses permit only a limited freedom and a limited flexibility of grouping the packages.

It is felt a desire in the sector to be able to arrange packages after their formation in a more flexible manner, in particular to be able to generate groups of packages according to a desired pattern that can vary over time over a high number of possibilities.

EP-A-2656707 discloses a grouping apparatus based on planar motor technology with carriers configured to support the packages such that the packages are freely moveable on the carrier so as to allow for a compaction of the packages. This apparatus needs improvements in particular when it comes to flexibility and reliability.

### DISCLOSURE OF INVENTION

It is therefore an object of the present invention to provide a grouping apparatus for generating groups of packages filled with a pourable product, in particular filled with a pourable food product, according to a desired pattern. Preferentially, it is an object of the present invention to provide a grouping apparatus for generating groups of packages formed from a multilayer packaging material and filled with a pourable product, in particular a pourable food product, according to a desired pattern.

Advantageously, it is another object of the present invention to provide a packaging plant for producing packages filled with a pourable product, in particular a pourable food product, and having at least one grouping apparatus. Preferentially, it is another object of the present invention to provide a packaging plant for producing packages formed from a multilayer packaging material and filled with a pourable product, in particular a pourable food product, and having at least one grouping apparatus.

Advantageously, it is another object of the present invention to provide a method for generating groups of packages filled with a pourable product, in particular filled with a pourable food product, according to a desired pattern. Preferentially, it is another object of the present invention to provide a method for generating groups of packages formed from a multilayer packaging material and filled with a pourable product, in particular a pourable food product, according to a desired pattern.

### BRIEF DESCRIPTION OF THE DRAWINGS

A non-limiting embodiment of the present invention will be described by way of example with reference to the accompanying drawings, in which:
- Figure 1 is a schematic view of a packaging plant having at least one grouping apparatus according to the present invention, with parts removed for clarity;
- Figure 2 is a schematic perspective view of a grouping apparatus according to the first embodiment of the present invention, with parts removed for clarity;
- Figure 3 is a schematic perspective top view of the grouping apparatus according to a first embodiment of the present invention, with parts removed for clarity;
- Figures 4a-4c are schematic top views of a detail of
the grouping apparatus of Figure 3 illustrating different steps during the preparation of groups of packages, respectively, with parts removed for clarity; and

Figures 5a -5c are schematic top views of a detail of a grouping apparatus according to a second embodiment of the present invention and illustrating different steps during the preparation of groups of packages, respectively, with parts removed for clarity.

### BEST MODES FOR CARRYING OUT THE INVENTION

Number 1 indicates as a whole a packaging plant for producing packages 2 filled with a pourable product, in particular a pourable food product, such as milk, milk drinks, yoghurt, yoghurt drinks, fruit juice, wine, tomato sauce, emulsions, beverages containing pulp, salt, sugar, and so on.

In more detail, packaging plant 1 may be configured to produce packages 2 from a multilayer packaging material, preferentially having heat seal properties (i.e., portions of the multilayer packaging material can be sealed to one another using heat and advantageously also pressure).

In further detail, the multilayer packaging material may comprise at least one layer of fibrous material, such as e.g. a paper or cardboard, and at least two layers of heat-seal plastic material, e.g. polyethylene, interposing the layer of fibrous material in between one another. One of these two layers of heat-seal plastic material may define the inner face of package 2 contacting the pourable product.

Furthermore, the multilayer packaging material may also comprise a layer of gas- and light-barrier material comprising and/or consisting of a metallic material, preferentially arranged between one of the layers of heat-seal polymeric material and the layer of fibrous material.

Preferentially, the packaging material may also comprise a further layer of heat-seal polymeric material placed between the layer of gas- and light-barrier material and the layer of fibrous material.

Moreover, the multilayer packaging material may be provided in the form of a web 3.

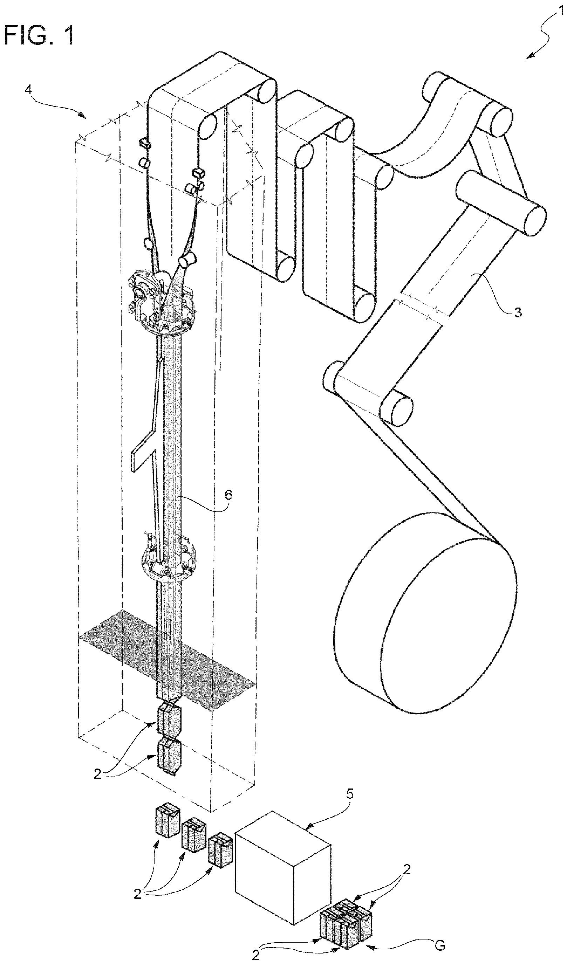

With reference to Figure 1, packaging plant 1 may comprise a package forming apparatus 4 for forming packages 2, in particular for forming and filling packages 2, even more particular for forming packages 2 from the multilayer packaging material and filling packages 2 with the pourable product. In more detail, package forming apparatus 4 may be configured to produce packages 2 and to fill packages 2 with the pourable product.

In further detail, package forming apparatus 4 may be configured to produce packages 2 by forming a tube 6 from web 3, longitudinally sealing tube 6, filling tube 6 with the pourable product and to transversally seal and cut tube 6.

Packaging plant 1 further comprises at least one grouping apparatus 5 for generating groups G of packages 2 according to a desired pattern.

Packaging plant 1 may further comprise at least one conveying apparatus (not shown) for advancing packages 2 from package forming apparatus 4 to grouping apparatus 5.

Packaging plant 1 may further comprise at least one secondary packaging apparatus (not shown) for disposing and/or depositing and keeping in place each group G of packages 2 generated in grouping apparatus 5 according to the respective desired pattern.

The secondary packaging apparatus may include, for example, a cardboard packer, configured to pack each group G of packages 2 in a carton. In particular, the cardboard packer may be configured to maintain the pattern generated by the grouping apparatus 5 while packing each group G of packages 2. Alternatively or in addition, the secondary packaging apparatus may include a wrapping machine configured to wrap each group G of packages 2 within a wrapping material, such as a web of plastic material.

As intended herein, a desired pattern of a respective group G of packages 2 may be defined by and/or consist in a specific number of packages 2 and/or a specific arrangement of packages 2 with respect to one another, e.g. a specific number of packages 2 may be arranged with a specific orientation with respect to one another, thereby forming a respective group G of packages 2 having a precise and predetermined pattern. For example, the group G of packages 2 may include three or more packages 2 disposed in a row. According to another example, the group G of packages 2 may include four or more packages 2 disposed in two parallel rows. According to such an example, each row may comprise at least two packages 2. Preferentially, according to such an example, each group G of packages 2 may comprise an odd number of packages 2.

It may also be possible that one group G comprises different kinds of packages 2 and the desired pattern may correspond for example to a combination and respective orientations of the packages 2 of a different kind. For example, the group G of packages 2 may include four packages 2 disposed in two parallel rows, wherein each row has a package 2 of one kind and a package 2 of another kind. Alternatively, the group G of packages may include at least six packages 2 disposed in two parallel rows wherein each row has one package 2 of one kind and two packages 2 of another kind.

According to some possible embodiments, grouping apparatus 5 may allow to group packages 2 such that an overall desired aesthetical appearance of the respective group G is obtained.

For example, each package 2 may comprise a respective decoration. The decoration may substantially be the same for all packages 2 and grouping apparatus 5 may be configured such that the desired pattern foresees that a same desired portion of packages 2 is visible to the final consumer.

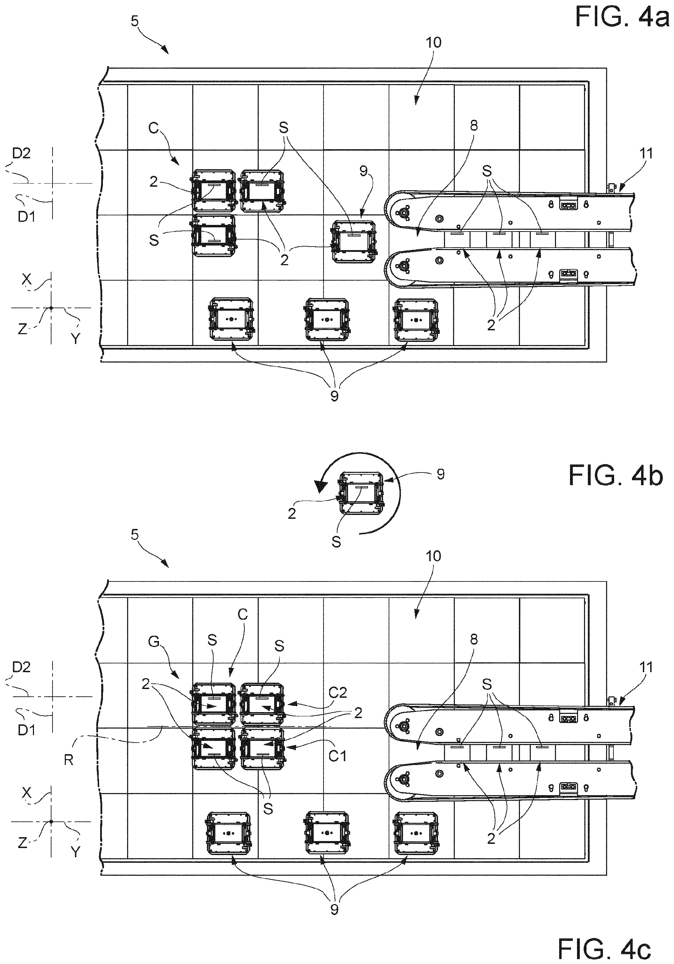

According to an alternative non-limiting embodiment of the present invention illustrated in Figures 4a to 4c, each package 2 may comprise a respective sign S and/or decoration printed on a respective outward surface 2a and packages 2 of a respective group of packages 2 may preferentially be arranged with respect to another according to a specific orientation of their respective signs S and/or decorations with respect to another.

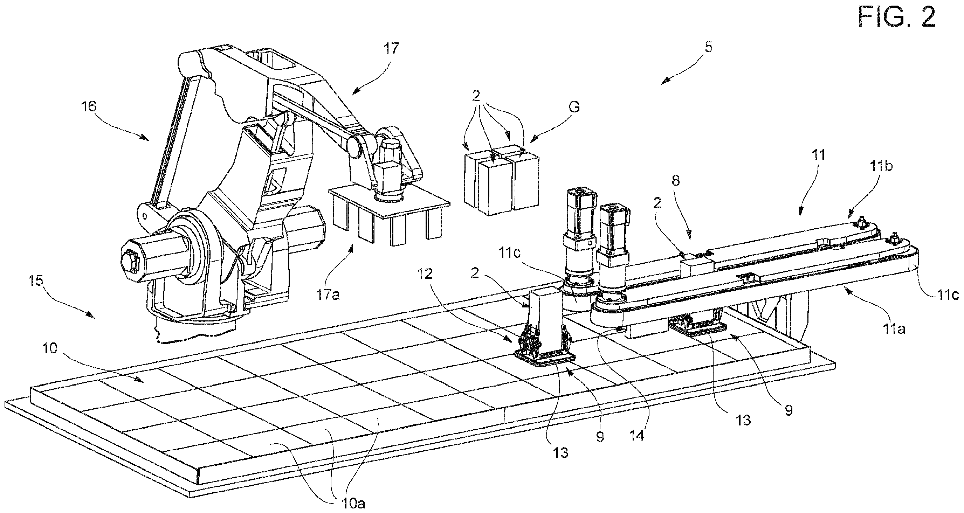

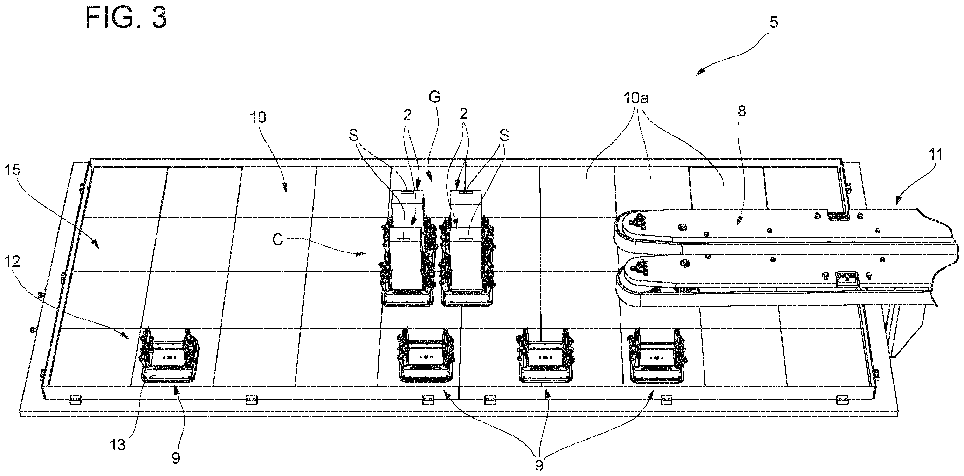

With reference to Figures 2 and 3, grouping apparatus 5 may comprise an inlet station 8 configured for feeding a plurality of packages 2.

Grouping apparatus 5 may comprise a plurality of carriers 9 each configured to carry at least one, preferentially only one, respective package 2 (at a time) in a non-movable manner. Carriers 9 are configured to receive said at least one package 2 from the inlet station 8.

Grouping apparatus 5 may comprise a planar motor 10 configured to selectively and independently control the advancement of carriers 9.

As used herein, the phrase "selectively and independently controlling the advancement of carriers 9" and variations thereof mean that planar motor 10 may be configured to selectively and independently accelerate and/or decelerate and/or rotate each carrier 9 with respect to the other carriers 9. Still, planar motor 10 may be configured to advance each carrier 9 in a coordinated manner with respect to one or more other carriers 9.

Grouping apparatus 5 may further comprise at least one inlet conveyor 11 having a respective inlet and configured to advance packages 2 from the conveying apparatus to inlet station 8 at which each package 2 is transferred to a respective carrier 9.

In more detail, inlet conveyor 11 may comprise a first belt conveyor 11a and a second belt conveyor 11b spaced apart from one another and each one preferentially having a respective belt 11c. In particular, first belt conveyor 11a and second belt conveyor 11b may be configured to interpose packages 2 between one another, preferentially between the respective belts 11c, and to advance packages 2, through the coordinated motion of the respective belts 11c along a respective (endless) path.

Each carrier 9 may comprise a respective retaining device 12 configured to retain the respective package 2 and such that the respective package 2 is not-moveable with respect to the respective carrier 9; i.e. the respective package 2 is secured on the respective carrier 9.

In more detail, each retaining device 12 may be moveable between an open configuration in which retaining device 12 is configured to receive or release a respective package 2 and a retaining configuration in which the respective retaining device 12 retains the respective package 2 in particular during the advancement of carrier 9. Preferentially, with the respective retaining device 12 being controlled in the respective retaining configuration, the respective package 2 cannot move with respect to the respective carrier 9.

In the example shown, each retaining device 12 may include a pair of pliers that are moveable with respect to one another between the open configuration, in which the pliers are withdrawn from each other, and the retaining configuration, in which the pliers are approached to one another to firmly hold the respective package 2.

Preferentially, each carrier 9 may also comprise a respective support platform 13 configured to carry a respective package 2 and/or a respective retaining device 12. More preferentially, each retaining device 12 may be mounted on and/or may extend from the respective support platform 13.

Moreover, each carrier 9 is configured such that packages 2 cannot move on the respective support platform 13, with the respective retaining device 12 being in the retaining configuration. In other words, packages 2 are carried in a non-moveable manner, when the retaining device 12 is in the retaining configuration.

Preferentially, grouping apparatus 5 may comprise a control device 14 (only partially and schematically shown in Figure 2) configured to control, in particular to selectively control, the movement of each retaining device 12 from the respective open configuration to the respective retaining configuration.

In more detail, control device 14 may be configured to control the movement of each retaining device 12 from the respective open configuration to the respective retaining configuration after and/or during feeding of a respective package 2 at inlet station 8.

Preferentially, control device 14 may comprise a cam system configured to control the movement of each retaining device 12 from the respective open configuration to the respective retaining configuration. More preferentially, the cam system is associated to inlet conveyor 11. In another embodiment, control device 14 may be electronic.

According to some possible non-limiting embodiments, each carrier 9 may comprise an actuation device configured to move the respective retaining device 12 between the respective open configuration and the respective retaining configuration.

According to some preferred non-limiting embodiments and with reference to Figures 2 to 4c, planar motor 10 may be configured to synchronise the advancement of each carrier 9 with respect to the respective package 2 during the advancement of the respective package 2 by means of inlet conveyor 11.

In more detail, planar motor 10 may be configured to control the advancement of each carrier 9 during a loading operation of a package 2 onto a respective carrier 9 at inlet station 8.

In further detail, planar motor 10 may be configured to control the advancement of each carrier 9 such that control device 14 controls the movement of the respective retaining device 12 from the open configuration to the retaining configuration after the respective carrier 9 receives the respective packages 2.

In further detail, planar motor 10 may be configured to selectively control the advancement of each carrier 9 independently from the other carriers 9. More specifically, planar motor 10 may advance each carrier 9 with a selective acceleration and deceleration which may differ from the acceleration and deceleration of the other carriers 9. Furthermore, planar motor 10 may control the advancement of each carrier 9 such that any undesired impact with any one of the other carriers 9 is avoided.

According to some preferred non-limiting embodiments, planar motor 10 may be configured to control the movement of each carrier 9 along at least two linear directions and control the rotation of each carrier 9 around at least one rotational direction. In other words, each carrier 9 comes along with at least three degrees of freedom.

More specifically, planar motor 10 may be configured to control the linear movement of each carrier 9 along a first direction X and a second direction Y transversal, preferentially perpendicular, to first direction X, and preferentially along a third direction Z transversal, preferentially perpendicular, to first direction X and second direction Y. Accordingly, it is possible to precisely control the spatial position of each carrier 9 in a two-dimensional space, preferentially in a three-dimensional space.

Preferentially, the movement of each carrier 9 along third direction Z may elevate carrier 9 from planar motor 10.

Preferentially, first belt conveyor 11a and second belt conveyor 11b may be parallel to planar motor 10, preferentially to second direction Y.

Furthermore, planar motor 10 may be configured to control a rotational movement of each carrier 9 around a first rotation axis, preferentially parallel to third direction Z.

According to some possible non-limiting embodiments, planar motor 10 may be configured to also control a rotational movement of each carrier 9 around a second rotation axis and/or a third rotation axis.

Preferentially, the second rotation axis may be transversal, preferentially perpendicular, to the first rotation axis.

Preferentially, the third rotation axis may be transversal, preferentially perpendicular, to the first rotation axis and the second rotation axis.

Preferentially, the second rotation axis and the third rotation axis may be parallel to first direction X and second direction Y, respectively.

Accordingly, it may also be possible to precisely control the angular position of carriers 9.

According to some possible non-limiting embodiments, planar motor 10 may be configured to stop the advancement of a carrier 9 at least along first direction X and second direction Y during a rotational movement of the carrier 9 about at least the third rotation axis. In other words, when, in use, rotating a carrier 9 around the first rotation axis and/or the second rotation axis and/or the third rotation axis, the carrier 9 does not move along first direction X and/or second direction Y and/or third direction Z.

Even more specifically, planar motor 10 may be configured to control the advancement of a plurality of carriers 9 carrying a respective package 9 of a respective group G of packages 2 in order that the carriers 9 of a set C of carriers 9 may be spatially and angularly arranged and oriented with respect to one another in such a manner that the respective packages 2 are positioned according to the desired pattern.

According to the present application and with particular reference to Figure 2, planar motor 10 may comprise one or more planar control modules 10a, preferentially each one of them extending along a first axis, preferentially parallel to first direction X, and a second axis, preferentially parallel to second direction Y.

According to some possible non-limiting embodiments, planar motor 10 may comprise planar control modules 10a and the plurality of carriers 9.

In further detail, planar control modules 10a may be operatively coupled to a control unit (not shown) of grouping apparatus 5 configured to control the operations (e.g. movements and/or rotations of carriers 9) carried out by grouping apparatus 5 itself, preferentially by planar motor 10. In particular, the control unit may control the advancement of carriers 9 carried by planar motor 10.

Preferentially, each planar control module 10a may comprise one or more induction coils (not shown) configured to generate local electromagnetic fields for selectively controlling the advancement of carriers 9.

In particular, the control unit may be configured to control the induction coils in order to control the movement of carriers 9, preferentially along first direction X, second direction Y and/or third direction Z and/or around the first rotation axis, and/or around the second rotation axis and/or around the third rotation axis.

More specifically, planar motor 10 may be configured to control the movement of carriers 9 along third direction Z so as to elevate carriers 9 from planar control modules 10a.

Advantageously, each carrier 9 may comprise at least one magnetic and/or ferromagnetic element for allowing the interaction of each carrier 9 with the local electromagnetic fields generated by the induction coils.

With particular reference to Figures 3 to 4c and according to some possible embodiments, set C of carriers 9 may comprise at least two carriers 9, preferentially arranged one after the other along a first alignment direction D1. Preferentially, first alignment direction D1 may be parallel to first direction X.

In more detail, set C may comprise at least four carriers 9. Preferentially, at least two carriers 9 of set C may be arranged one after the other along a second alignment direction D2 transversal, preferentially perpendicular, to first alignment direction D1. Preferentially, second alignment direction D2 may be parallel to second direction Y.

As illustrated in the example of Figures 3 and 4c of a preferred non-limiting embodiment of the present invention, set C may comprise four carriers 9 carrying the respective packages 2 of a respective group C and being arranged along first alignment direction D1 and second alignment direction D2 so as to form a two by two array arrangement, in accordance with the desired pattern of group G.

In further detail, planar motor 10 may be configured to advance set C to one or more discharge stations 15 (Figures 2 and 3).

In more detail, grouping apparatus 5 may comprise a discharge device 16 (Figure 2) configured to discharge each group G of packages 2 from the respective set C of carriers 9 at one of the one or more discharge stations 15, thereby maintaining the desired pattern, and to preferentially transfer each group G to a transfer station (not shown).

Preferentially, planar motor 10 may be configured to selectively control the movement of each carrier 9 of the respective set C along the third direction Z whilst discharge device 16 executes the discharging operation.

Moreover, discharge device 16 may be configured to compact each group G of packages 2 such that packages 2 are in contact with one another. Preferentially, discharge device 16 may be configured to execute the compacting operation with groups G being discharged from planar motor 10.

Preferentially, each group G may be transferred to a transfer station of the secondary packaging apparatus.

Preferentially, the control unit may be also configured to control the operations carried by discharge device 16.

With reference to Figure 2, discharge device 16 may comprise at least a retaining assembly 17a configured to pick up and/or retain each package 2 of a respective group G, to (simultaneously) discharge the packages 2 of a respective set C from the respective carriers 9 and to transfer the group G of packages 2 to the transfer station.

Preferentially, discharge device 16 may comprise a robotic system comprising retaining assembly 17a. More preferentially, the robotic system may comprise at least a robotic arm 17 having retaining assembly 17a. Alternatively, the robotic system may comprise and/or consist of a gantry system (not shown) comprising retaining assembly 17a.

In further detail, retaining assembly 17a may comprise one or more gripping elements (not shown) configured to grip and retain packages 2 of a respective group G and to simultaneously discharge the packages 2 from the respective set C of carriers 9, thereby maintaining the desired pattern. Alternatively, retaining assembly 17a may comprise at least one suction element (not shown) configured apply a suction force on suction packages 2 of a respective group of packages 2 away from the respective carriers 9 of the respective set C, thereby maintaining the desired pattern.

Preferentially, retaining assembly 17a may comprise controlling means (not shown) configured to control the movement of the retaining devices 12 of a respective set C of carriers 9 from the retaining configuration to the open configuration before and/or whilst the retaining assembly 17a discharges the packages 2 of a respective group G from the respective carriers 9, preferentially at discharge station 15, and transfers them to a transfer station (not shown).

Preferentially, planar motor 10 may be configured to selectively control the movement of each carrier 9 of the respective set C along third direction Z whilst retaining assembly 17a executes the discharging operation.

In use, packaging plant 1 produces packages 2 filled with the pourable product.

In particular, package forming apparatus 4 forms packages 2, delivers packages 2 to grouping apparatus 5 by means of the conveying apparatus and grouping apparatus 5 advances packages 2 from inlet station 8 to discharge station 15.

In more detail, package forming apparatus 4 forms tube 6 from web 3, longitudinally seals tube 6 and shapes, transversally seals and transversally cuts tube 6 so as to obtain packages 2.

Packages 2 are then transferred to inlet conveyor 11 by the conveying apparatus, and the operations of grouping apparatus 5 commence.

During the operation of grouping apparatus 5 groups G of packages 2 are formed according to the desired pattern.

The method for generating groups G of packages 2 comprises at least the steps of:
- feeding packages 2 to inlet station 8;
- loading each package 2 onto one respective carrier 9 of a plurality of carriers 9 at inlet station 8;
- advancing carriers 9, preferentially from inlet station 8 to discharge station 15, by means of planar motor 10 in dependence of the desired pattern of the respective group G of packages 2 so as to obtain a set C of carriers 9; and
- arranging and orienting with respect to one another carriers 9 of the respective set C in order that the respective packages 2 of the respective group G are
positioned according to the desired pattern of the respective group G.

Preferentially, the step of arranging and orienting is executed after and/or during the step of advancing.

The method may also comprise the step of discharging the group G of packages 2 from the respective carriers 9 of the set C at one of the one or more discharge stations 15. Preferentially, the step of discharging is executed after the step of arranging and orienting.

Additionally, the method may comprise the step of compacting packages 2 of the respective group G so as to place packages 2 in contact with one another.

Preferentially, the step of compacting is executed after the step of discharging, and preferentially away from planar motor 10.

Furthermore, the method may comprise the step of transferring group G of packages 2 to transfer station (away from planar motor 10).

Preferentially, the step of transferring is executed after the step of discharging.

Preferentially, the step of transferring is executed after and/or during to the step of compacting.

In further detail, during the step of feeding, inlet conveyor 11 feeds packages 2 to inlet station 8.

During the step of loading and whilst each package 2 is being fed to inlet station 8, one respective carrier 9 approaches inlet station 8, in particular while being controlled to approach inlet station 8 by planar motor 10, such that the respective support platform 13 is interposed between planar motor 10 and the respective package 2 while the respective retaining device 12 is in the respective open configuration. Afterwards, the respective retaining device 12 is moved to the respective retaining configuration by control device 14, in particular by the cam system.

Once the respective retaining device 12 is moved to the respective retaining configuration, the respective package 2 can be detached from inlet conveyor 11. A loading operation of package 2 onto a respective carrier 9 is therefore completed.

In particular, the respective carrier 9 carries, preferentially the respective retaining device 12 retains, each package 2 in a non-movable manner.

Preferentially, prior to moving the respective retaining device 12 to the respective retaining configuration, the respective carrier 9 is moved by planar motor 10 along third direction Z and towards the respective package 2, preferentially so as to bring the respective package 2 into contact with the respective support platform 13.

In more detail, a plurality of carriers 9 are loaded one after the other with a respective package 2.

After the loading operation, during the step of arranging and orienting, a set C of carriers 9 each carrying a respective package 2 are advanced so as to form a respective group G of packages 2 and to arrange the respective packages 2 in dependence of the desired pattern of the group G.

Preferentially, one or more carriers 9 of the set C may be rotated about the first rotation axis, preferentially between 0° to at least 270° about the first rotation axis, by planar motor 10 so as to orient the respective package 2 in accordance with the desired pattern of the respective group G.

In particular, in order to define each group G, planar motor 10 controls the movement of each carrier 9 into first direction X and second direction Y. Additionally, planar motor 10 may also rotate one or more carriers 9 about the respective first rotation axis. Preferentially, planar motor 10 may interrupt the advancement of a carrier 9 along first direction X and second direction Y while rotating the same carrier 9 about the first rotation axis. In other words, during the rotation about the respective first rotation axis, carrier 9 does not perform a linear movement into first direction X and into the second direction Y.

In further detail, during the step of advancing, planar motor 10 selectively controls the movement of each carrier 9 such that each carrier 9 is advanced along first direction X and/or second direction Y and/or rotated about the first rotation axis, preferentially with an acceleration or deceleration which is independent of that of the other carriers 9.

In more detail, during the step of advancing, planar motor 10 coordinates the advancement of carriers 9 of the set C along first direction X and second direction Y.

Figures 4a to 4c illustrate the example case in which each group G of packages 2 comprises four respective packages 2 having a sign S, e.g. on their respective top outward surfaces 2a. Planar motor 10 may align the respective set C of carriers 9 with respect to first alignment direction D1 and second alignment direction D2 so as to arrange the respective carriers 9 in an array (e.g. two by two array or an M by N array with M and N being natural numbers larger than 1) and position the respective packages 2 such that the signs S of a first subgroup (e.g. pair) of packages 2 arranged in a first column C1 of the array and the signs S of a second subgroup (e.g. pair) of packages 2 arranged in the second column C2 of the array are mirrored with respect to an axis R therebetween parallel to second alignment direction D2 and/or second direction Y.

During the step of advancing and after arranging and positioning, the respective packages 2 according to the desired pattern of the respective group G (i.e. after having formed group G), planar motor 10 advances set C of carriers 9 to discharge station 15. Alternatively, carriers 9 may be positioned at discharge station 15 during formation of the respective group G and, accordingly, one may avoid to move set C and/or group G as a whole after formation of the group G.

At discharge station 15, during the step of discharging, robotic arm 17 may be preferentially controlled by the control unit to approach set C so as to position retaining assembly 17a over group G of packages 2, and preferentially to discharge group G of packages 2 from the respective carriers 9.

Moreover, each carrier 9 of the respective set C may be preferentially controlled by planar motor 10 to selectively move along third direction Z whilst discharge device 16 executes the discharging operation.

The controlling means, preferentially comprised in retaining assembly 17a, control the movement of the respective retaining devices 12 from the respective retaining configurations to the respective open configurations before and/or whilst retaining assembly 17a retains and discharges the packages 2 of the respective group G from the respective carriers 9, thereby maintaining the desired pattern.

During the step of compacting, packages 2 of the respective group G are preferentially compacted by retaining assembly 17a such that each package 2 is in contact with at least another package 2. Preferentially, the compacting operation is not carried on planar motor 10.

During the step of transferring, the respective group G is then preferentially transferred to the transfer station. Afterwards, each group G of carriers 9 generated in grouping apparatus 5 according to the respective desired pattern are disposed and/or deposited and kept in place in the secondary packaging apparatus.

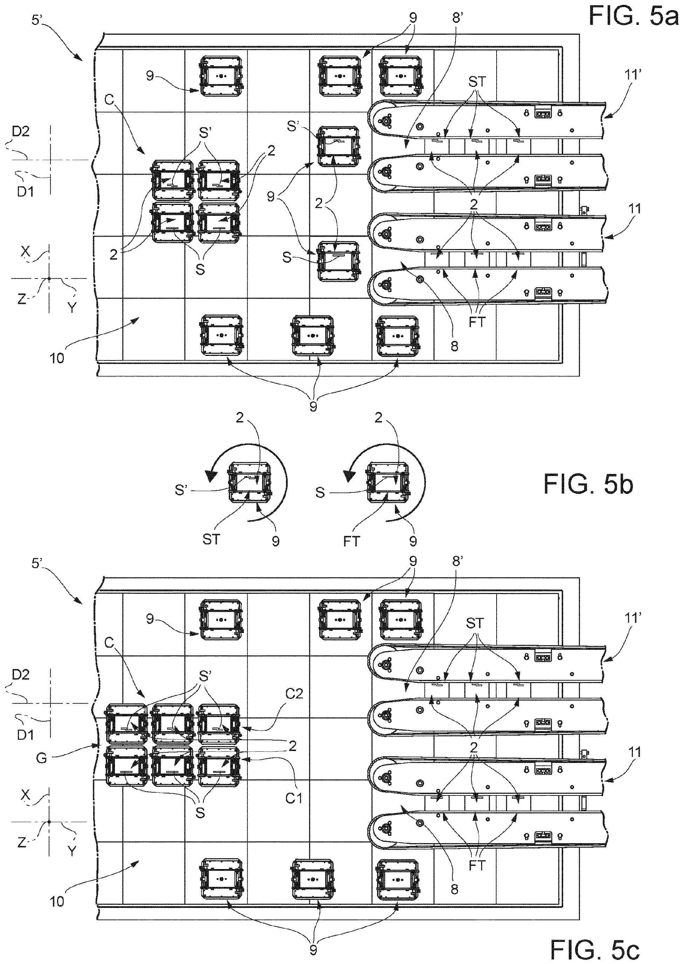

With reference to Figures 5a to 5c, number 6' indicates a second non-limiting embodiment of a grouping apparatus according to the present invention; as grouping apparatus 5' is similar to grouping apparatus 5, the following description is limited to the differences between them, and using the same references, where possible, for identical or corresponding parts.

In further detail, grouping apparatus 5' may comprise at least a first inlet conveyor 11 and a second inlet conveyor 11', e.g. being parallel to inlet conveyor 11. First inlet conveyor 11 may be configured to advance a first line of packages 2 to a first inlet station 8, preferentially from the conveying apparatus to first inlet station 8, at which each package 2 is transferred to a respective carrier 9. Similarly, second inlet conveyor 11' may be configured to advance a second line of packages 2 to a second inlet station 8', preferentially from the conveying apparatus to second inlet station 8', at which each package 2 is transferred to a respective carrier 9.

According to some possible embodiments, first inlet conveyor 11 and second inlet conveyor 11' may be configured to advance packages 2 of the same type, e.g. originating from different package forming apparatuses or alternatively from the same package forming apparatus.

According to some other non-limiting embodiments, first inlet conveyor 11 may be configured to advance a first type FT of packages 2 to a first inlet station 8, preferentially from the conveying apparatus to first inlet station 8, at which each package 2 is transferred to a respective carrier 9. Similarly, second inlet conveyor 11' may be configured to advance a second type ST of packages 2 to a second inlet station 8', preferentially from the conveying apparatus to second inlet station 8', at which each package 2 is transferred to a respective carrier 9.

Preferentially, first type FT of packages 2 differ from second type ST of packages 2.

According to some possible embodiments, first type FT of packages 2 may be formed during the operation of package forming apparatus 4 and second type ST of packages may be formed during the operation of another package forming apparatus.

According to some possible embodiments, first type FT of packages 2 may differ from second type ST of packages 2 with regard to their aesthetical appearance (e.g. having a different decoration and/or having one or more differing colors) and/or their size and/or their shape.

In addition or alternatively, first type FT of packages 2 may be filled with a different pourable product, preferentially pourable food product, than second type ST of packages 2. E.g., packages 2 of the first type FT may be filled with skim milk and packages 2 of the second type ST with whole milk.

In more detail, planar motor 10 may be configured to control the advancement of a plurality of carriers 9 carrying one respective package 2 of the first type FT and the advancement of a plurality of carriers 9 carrying one respective package 2 of the second type ST in dependence of the desired pattern of a group G of packages 2.

In particular, group G may comprise at least one package 2 of the first type FT and at least one package 2 of the second type ST.

More specifically, planar motor 10 may be configured to control the advancement of the plurality of carriers 9 carrying a respective package 9 of a respective group G in order that a set C of carriers 9 may be spatially and angularly arranged and oriented with respect to one another in such a manner that the respective packages 2 are positioned according to the desired pattern having at least one package 2 of first type FT and at least one package 2 of second type ST. It should be noted that according to some embodiments, some carriers 9 carry thereby packages 2 of the first type FT and some other carriers 9 carry packages 2 of the second type SF.

As operation of packaging plant 1 is similar when having grouping apparatus 5 and when having grouping apparatus 5', and therefore in the following we describe solely the differences between operation of packaging plant 1 having grouping apparatus 5 and packaging plant 1 having grouping apparatus 5'.

In particular, packaging plant 1 produces packages 2 of the first type FT and packages 2 of the second type ST, each package 2 filled with the pourable product.

In particular, package forming apparatus 4 forms and fills packages 2 of the first type FT and the another package forming apparatus forms and fills packages 2 of the second type ST. Then the packages 2 of the first type FT and packages 2 of the second type ST are delivered to grouping apparatus 5' by means of the conveying apparatus.

Furthermore, grouping apparatus 5' advances packages 2 of the first type FT from inlet station 8 to discharge station 15 and packages 2 of the second type ST from inlet station 8' to discharge station 15.

In more detail, package forming apparatus 4 forms tube 6 from web 3, longitudinally seals tube 6 and shapes, transversally seals and transversally cuts tube 6 so as to obtain packages 2 of the first type FT and packages 2 of the second type ST.

Alternatively, in use, package forming apparatus 4 may form packages 2 of the first type FT and packages 2 of the second type ST.

In further detail, during the step of feeding, inlet conveyor 11 feeds packages 2 of the first type FT to inlet station 8 and inlet conveyor 11' feeds packages 2 of the second type ST to inlet station 8'.

Moreover, during the step of loading and whilst each package 2 of the first type FT is being fed to inlet station 8 /inlet station 8', one respective carrier 9 approaches inlet station 8, in particular while being controlled by planar motor 10.

Additionally, during the step of loading and whilst each package 2 of the second type ST is being fed to inlet station 8', one respective carrier 9 approaches inlet station 8', in particular while being controlled by planar motor 10.

In further detail, during the step of loading, carriers 9 are controlled such that the respective support platforms 13 are interposed between planar motor 10 and the respective package 2 while the respective retaining device 12 is in the respective open configuration. Afterwards, the respective retaining device 12 is moved to the respective retaining configuration by control device 14, in particular by the cam system.

Once the respective retaining device 12 is moved to the respective retaining configuration, the respective package 2 of the first type FT can be detached from inlet conveyor 11 and the respective package 2 of the second type ST can be detached from inlet conveyor 11'. A loading operation of package 2 of the first type FT on the respective carrier 9 and a loading operation of a package 2 of the second type ST onto a respective carrier 9 is therefore completed.

In more detail, a plurality of carriers 9 are loaded one after the other with a respective package 2 of the first type FT and, simultaneously, another plurality of carriers 9 are loaded one after the other with a respective package 2 of the second type ST.

After the loading operation, during the step of arranging and orienting, a set C of carriers 9 carrying a respective package 2 are advanced by means of planar motor 10 so as to form a respective group G comprising at least one package 2 of the first type FT and at least one package 2 of the second type ST and to arrange the respective packages 2 in dependence of the desired pattern of the group G.

Figures 5a to 5c illustrate the example case of each group G comprising three respective packages 2 of the first type TP having a sign S, e.g. on their respective top outward surfaces 2a, and three respective packages 2 of the second type ST having a sign S', e.g. on their respective top outward surfaces 2a. Planar motor 10 may align the respective set C of carriers 9 with respect to first alignment direction D1 and second alignment direction D2 so as to arrange the respective carriers 9 in a three by two array and position the respective packages 2 of the first FT/second type ST such that signs S of the packages 2 of the first type FT arranged in a first column C1 of the array and signs S' of the packages 2 of the second type ST arranged in a second column C2 of the array are positioned on a same side on their respective packages 2.

The advantages of package machine 1 and/or grouping apparatus 5 according to the present invention will be clear from the foregoing description.

In particular, grouping apparatus 5 allows to group packages 2 in a flexible and creative manner.

Moreover, grouping apparatus 5, in particular the use of discharge device 16, allows to maintain a desired pattern of the group G of packages 2 without the need of any time-consuming modifications.

Additionally, retaining devices 12 allow to retain packages 2 in a fixed position with respect to the respective carrier 9, independently on the motion profile of the carrier 9. In particular, this allows to obtain maximized acceleration and/or velocity profiles and/or deceleration profiles of the carrier 9 without risking that the package 2 is inadvertently released due to the motion of the carrier 2, thereby increasing the productivity of grouping apparatus 5.

Clearly, changes may be made to package machine 1 and/or grouping apparatus 5 and/or grouping apparatus 5' as described herein without, however, departing from the scope of protection as defined in the accompanying claims.

According to some possible non-limiting embodiments, grouping apparatus 5 may comprise more than one inlet conveyor 8, e.g. one being fed with packages 2 produced from packaging plant 1, more specifically, packages 2 formed by package forming apparatus 4 and another inlet conveyor being fed with packages 2 produced from another packaging plant, more specifically, packages 2 formed by another package forming apparatus.

According to some possible non-limiting embodiments not shown, grouping apparatus 5 and/or grouping apparatus 5' may be configured to form a first type of group G of packages 2 according to a first desired pattern and a second type of group G of packages 2 according to a second desired pattern.

According to some possible non-limiting embodiments not shown, grouping apparatus 5' receives packages 2 of the same type from inlet conveyor 11 and inlet conveyor 11'.

## Claims

1. Grouping apparatus (5,5') for generating groups (G) of packages (2) filled with a pourable product according to a desired pattern;
the grouping apparatus (5,5') comprises:
- an inlet station (8) for feeding a plurality of packages (2);
- a plurality of carriers (9), each one configured to receive at least one package (2) from the inlet station (8) and configured to carry said at least one package (2) in a non-movable manner with respect to the carrier (9);
- a planar motor (10) configured to selectively and independently control the advancement of each carrier (9);
wherein the planar motor (10) is configured to control the advancement of the plurality of carriers (9) carrying, in use, at least one respective package (2), in dependence of the desired pattern of each group (G) of packages (2), wherein the planar motor (10) is configured to control a set (C) of carriers (9) such that the respective packages (2) carried by the set (C) of carriers (9) are positioned according to the desired pattern, to form the corresponding group (G) of packages (2).

2. Grouping apparatus (5,5') according to claim 1, wherein the planar motor (10) is configured to advance the set (C) of carriers (9) to a discharge station (15); and
wherein the grouping apparatus (5,5') further comprises a discharge device (16) configured to discharge each group (G) of packages (2) from the respective carriers (9) thereby maintaining the desired pattern.

3. Grouping apparatus (5,5') according to claim 2, wherein the discharge device (16) is configured to compact the group (G) of packages (2) such that the packages (2) are in contact with one another.

4. Grouping apparatus (5,5') according to claim 3, wherein the discharge device (16) comprises a retaining assembly (17a) configured to retain each package (2) of the group (G) of packages (2) and to discharge the packages (2) from their respective carriers (9) and to transfer the group (G) of packages (2) to a transfer station.

5. Grouping apparatus (5,5') according to claim 4, wherein each carrier (9) comprises a retaining device (12);
wherein each retaining device (12) is controllable between an open configuration in which the discharge device (16) is configured to receive or release the respective package (2) and a retaining configuration in which the respective retaining device (12) is configured to retain the respective package (2);
wherein the retaining assembly (17a) comprises controlling means configured to control the retaining devices (12) from the retaining configurations to the open configurations before and/or whilst the retaining assembly (17a) discharges the packages (2) of the group (G) of packages (2) from the respective carriers (9).

6. Grouping apparatus (5,5') according to any one of the preceding claims, wherein the set (C) of carriers (9) comprises at least two carriers (9); wherein the at least two carriers (9) are arranged one after the other along a first alignment direction (D1).

7. Grouping apparatus (5,5') according to claim 6, wherein the set (C) of carriers (9) comprises at least four carriers (9); wherein at least two carriers (9) of the set (C) of carriers (9) are arranged one after the other along a second alignment direction (D2) transversal to the first alignment direction (D1).

8. Grouping apparatus (5,5') according to any one of the preceding claims, wherein each carrier (9) can move at least along a first direction (X) and a second direction (Y) transversal to the first direction (X) and can rotate with respect to at least a third direction (Z) transversal to the first direction (X) and to the second direction (Y)
wherein the planar motor (10) is configured to rotate one or more carriers (9) about the third direction (Z) in dependence of the desired pattern.

9. Grouping apparatus (5,5') according to claim 8, wherein the planar motor (10) is configured to stop the advancement of the carriers (9) along the first direction (X) and the second direction (Y) during the rotation of the carriers (9) about the third direction (Z).

10. Grouping apparatus (5,5') according to claim 8 or 9, wherein each carrier (9) can move along the third direction (Z).

11. Grouping apparatus (5,5') according to any one of the preceding claims, wherein the grouping apparatus (5') comprises:
- a first inlet station (8) including-a first inlet conveyor (11) and
- a second inlet station (8'), including a second inlet conveyor (11').

12. Grouping apparatus (5,5') according to claim 11, wherein the group (G) of packages (2) comprises at least one package (2) of a first type (FT) and at least one package (2) of a second type (ST), wherein the first inlet conveyor (11) is configured to advance the packages (2) of the first type (FT) and the second inlet conveyor (11') is configured to advance the packages (2) of the second type (ST);
wherein the planar motor (10) is configured to control the advancement of carriers (9) carrying at least one respective package (2) of the first type (FT) and the advancement of carriers (9) carrying at least one respective package (2) of the second type (ST) in dependence of the desired pattern of the group (G) of packages (2).

13. Packaging plant (1) for producing packages (2) filled with a pourable product, the packaging plant (1) comprising:
- a package forming apparatus (4) for forming the packages (2) and filling the packages (2) with the pourable product;
- at least one grouping apparatus (5,5') according to any one of the preceding claims;
- at least one conveying apparatus for advancing the packages (2) from the package forming apparatus (4) to the grouping apparatus (5); and
- at least one secondary packaging apparatus for receiving the groups(G) of packages (2) generated by the grouping apparatus (5,5') and for disposing and/or depositing and/or keeping in place each group (G) of packages (2) generated in the grouping apparatus (5,5') according to the respective desired pattern.

14. Method for generating groups (G) of packages (2) filled with a pourable product according to a desired pattern, the method comprising the steps of:
a. feeding packages (2) to an inlet station (8);
b. loading each package (2) onto one respective carrier (9) of a plurality of carriers (9) at the inlet station (8), wherein each carrier (9) carries a respective package (2) in a non-movable manner with respect to the carrier (9);
c. advancing the carriers (9) by means of a planar motor (10), in dependence of the desired pattern of the respective group (G) of packages (2), so as to obtain a set (C) of carriers (9); and
d. arranging and orienting with respect to one another the carriers (9) of the set (C) of carriers (9) in order to form a corresponding group (G) of packages (2) according to the desired pattern.

15. Method according to claim 14, further comprising the steps of:
e. discharging the group (G) of packages (2) from the respective carriers (9) of the set (C) of carriers (9) at a discharge station (15);
f. compacting the packages (2) of the respective group (G) such that each package (2) is in contact with at least another package (2);
g. transferring the group (G) of packages (2) from the discharge station (15) to a transfer station.

16. Method according to claim 14 or 15 comprising the steps of:
a. feeding a first type (FT) of packages (2) to a first inlet station (11) and a second type (ST) of packages (2) to second inlet station (8');
b. loading each package (2) of the first type (FT) onto one respective carrier (9) of a plurality of carriers (9) at the first inlet station (8) and loading each package (2) of the second type (ST) onto one respective carrier (9) of another plurality of carriers (9) at the second inlet station (8'), wherein each carrier (9) carries a respective package (2) in a non-movable manner with respect to the carrier (9);
c. advancing the carriers (9) by means of the planar motor (10) in dependence of the desired pattern of the respective group (G) of packages (2) so as to obtain a set (C) of carriers (9) comprising at least one carrier (9) carrying a package (2) of the first type (FT) and at least one carrier (9) carrying a package (2) of the second type (ST); and
d. arranging and orienting with respect to one another the carriers (9) of the set (C) of carriers (9) in order to form a corresponding group (G) comprising at least one package (2) of the first type (FT) and at least one package (2) of the second type (ST).
